# EUROPÄISCHE PATENTANMELDUNG

(11) **EP 3 282 568 A1**
(43) Veröffentlichungstag der Anmeldung: **14.02.2018**
(21) Anmeldenummer: 16183575.6
(22) Anmeldetag: 10.08.2016
(51) Int. Cl.: H02K 47/18, H02K 9/00, H02K 15/00

(54) **VERFAHREN ZUM BETRIEB EINES GENERATORS MIT EINER KÜHLEINRICHTUNG**

(71) Anmelder: Siemens Aktiengesellschaft, 80333 München (DE)
(72) Erfinder: Baca, Matthias, 44534 Lünen (DE); Evenkamp, Monja, 45128 Essen (DE); Gertz, Simon, 40229 Düsseldorf (DE); Grünewald, Dominik, 45479 Mülheim an der Ruhr (DE); Kowalski, Matthias, 45478 Mülheim an der Ruhr (DE)

(57) **Zusammenfassung**

Die Erfindung betrifft ein Verfahren zum Betrieb eines Generators (1) mit einer Kühleinrichtung (2) zum Kühlen einer Generatorkomponente (4) des Generators (1), mit den Schritten: Erfassen eines Betriebspunktes des Generators (1) und, Zuschalten eines Bypasses (6, 7) parallel zu einer Kühleinrichtungskomponente (3, 5) der Kühleinrichtung (2) auf das Erfassen eines Betriebspunktes mit geringem Kühlbedarf im Phasenschieberbetrieb hin.

## Beschreibung

Die Erfindung betrifft ein Verfahren zum Betrieb eines Generators mit einer Kühleinrichtung.

In der elektrischen Energieversorgung besteht weltweit der Trend, zunehmend auf erneuerbare Energien zu setzen. Da die Wirtschaftlichkeit von Erzeugungsanlagen im Bereich erneuerbarer Energien aber stark von deren Standort abhängt, wie z.B. bei Offshore-Windkraftanlagen, ergibt sich zunehmend das Problem, dass elektrische Energie über große Distanzen transportiert werden muss. Für den Transport der elektrischen Energie im Hoch- und Höchstspannungsnetz wird jedoch Blindleistung benötigt, um die Stabilität des Versorgungsnetzes zu gewährleisten. Generatoren in konventionellen (thermischen) Kraftwerken sind in der Lage, diese Blindleistung als Nebenprodukt zur Verfügung zu stellen. Durch den Abbau konventioneller Kraftwerkskapazitäten entstehen jedoch Engpässe in der Blindleistungserzeugung.

Eine Möglichkeit dem entgegen zu wirken sind leistungselektronische Einrichtungen, welche über Kondensatorbänke die entsprechende Blindleistung zur Verfügung stellen. Diese sind jedoch durch fehlende rotierende Massen nur bedingt der Netzstabilität zuträglich und können zudem nur kapazitive Blindleistungen zur Verfügung stellen.

Phasenschieber sind hingegen eine Möglichkeit, kapazitive wie auch induktive Blindleistung zur Verfügung zu stellen und zusätzlich durch rotierende Massen das Versorgungsnetz zu unterstützen. Da ein Phasenschieber keine Wirkleistung eingespeist, lassen sich keine Einnahmen mit dieser Maschine erzielen. Im Gegensatz zu normalen Kraftwerken wird sogar Wirkleistung aus dem Versorgungsnetz entnommen, d.h. motorische Antriebsleistung, die bezahlt werden muss. Der Leistungsbedarf eines Phasenschiebers trägt damit unmittelbar zu den Betriebskosten und der Wirtschaftlichkeit bei und wird daher in den Anschaffungskosten höher bewertet als bei konventionellen Kraftwerksgeneratoren. Um die wirtschaftliche Attraktivität eines Phasenschiebers zu steigern bleibt also nur die Betriebskosten, bestehend aus Wartungskosten und Verlustleistung, zu minimieren.

Es ist bekannt, Generatoren durch Entfernen eines Antriebs, wie z.B. einer Gas- oder Dampfturbine, direkt als Phasenschieber umzurüsten oder Generatoren direkt als Phasenschieber einzusetzen. Da es sich jedoch um Generatoren handelt, sind diese so ausgelegt, dass sie einen großen Bereich von Wirk- und Blindleistung abdecken. Entsprechend leistungsstark sind die Kühleinrichtungen derartiger Generatoren ausgelegt, deren Betrieb wiederum Betriebsenergie absorbiert, da diese die Verluste während des Betriebs vollständig zu absorbieren haben.

Es ist daher Aufgabe der Erfindung, den Betrieb von Generatoren als Phasenschieber energieeffizienter zu gestalten.

Erfindungsgemäß sind bei einem Verfahren zum Betrieb eines Generators mit einer Kühleinrichtung zum Kühlen einer des Generators die Schritte vorgesehen:
Erfassen eines Betriebspunktes des Generators, und, Zuschalten eines Bypasses parallel zu einer Kühleinrichtungskomponente der Kühleinrichtung auf das Erfassen eines Betriebspunktes mit geringem Kühlbedarf im Phasenschieberbetrieb hin.

Durch das Zuschalten von einem Bypass parallel zu einer Kühleinrichtungskomponente der Kühleinrichtung kann mit einfachen Mitteln eine Anpassung der Kühlleistung erreicht werden, insbesondere wenn der Generator als Phasenschieber mit dann deutlich reduziertem Kühlbedarf betrieben wird. Mit anderen Worten, die Erfindung wendet sich davon ab, bei einem Betrieb mit geringem Kühlbedarf die Kühlleistung eines Kühlers selbst anzupassen, sondern schlägt vor, die Kühlleistung des Kühlers unverändert zu lassen und stattdessen durch das Zuschalten von einem Bypass eine indirekte Anpassung der Kühlleistung zu erreichen.

Gemäß einer Ausführungsform ist der Bypass ein Kühlmittelfördereinrichtung-Bypass, der zumindest parallel zu einer als Kühlmittelfördereinrichtung ausgebildeten Kühleinrichtungskomponente geschaltet wird. Der Kühlmittelfördereinrichtungs-Bypass verbindet z.B. den Einlass und den Auslass der Kühlmittelfördereinrichtung, z.B. einen Lüfter, so dass Kühlmittel direkt vom Auslass zum Einlass zurückgefördert wird. Mit anderen Worten, die Kühlmittelfördereinrichtung wird im Betriebspunkt mit geringem Kühlbedarf zumindest teilweise im "Kurzschluss" betrieben. Hierdurch wird erreicht, das Kühlmittel zumindest teilweise im Kreis gefördert wird und nicht durch die für das Kühlmittel Strömungswiderstände darstellende zu kühlende Generatorkomponenten des Generators und den Kühler gefördert werden muss.

Gemäß einer bevorzugten Ausführungsform wird der Kühlmittelfördereinrichtung-Bypass außerdem parallel zu einer zu kühlenden Generatorkomponenten des Generators geschaltet. Somit strömt Kühlmittel vom Auslass der Kühlmittelfördereinrichtung durch die zu kühlenden Generatorkomponenten und dann vom Auslass der zu kühlenden zum Einlass der Kühlmittelfördereinrichtung zurück.

Gemäß einer bevorzugten Ausführungsform wird dem erfassten Kühlbedarf entsprechend der Kühlmittelfördereinrichtung-Bypass geöffnet oder geschlossen. So wird eine dem Kühlbedarf angepasst Kühlung erreicht.

Gemäß einer bevorzugten Ausführungsform ist der Bypass ein Kühler-Bypass, der zumindest parallel zu einer als Kühler ausgebildeten Kühleinrichtungskomponente geschaltet wird.

So kann Kühlmittel vom Einlass des Kühlers durch den Kühler-Bypass direkt zum Auslass des Kühlers strömen und so der Strömungswiderstand reduziert werden. Es wird also auf das Erfassen eines Betriebspunktes mit geringem Kühlbedarf hin der Kühler zum Kühlen einer Generatorkomponente des Generators hin zumindest teilweise überbrückt. Hierdurch wird der Gesamtströmungswiderstand eines Kühlmittelkreislaufs reduziert, da Kühlmittel nicht mehr durch den Kühler hindurch strömen muss. So wird die Kühlmittelfördereinrichtung mit reduzierter Leistung betrieben.

Gemäß einer bevorzugten Ausführungsform wird dem erfassten Kühlbedarf entsprechend der Kühler-Bypass geöffnet oder geschlossen. So kann ein erster Teilstrom des Kühlmittels durch den Kühler-Bypass und ein zweiter Teilstrom des Kühlmittels durch den Kühler geleitet werden, in dem das Kühlmittel eine Abkühlung erfährt. So wird eine dem Kühlbedarf angepasst Kühlung erreicht.

Ferner gehören zur Erfindung ein Generator zur Durchführung eines derartigen Verfahrens und eine Kühleinrichtung für einen derartigen Generator.

Im Folgenden wird eine bevorzugte Ausführungsform des erfindungsgemäßen Verfahrens anhand der beigefügten schematischen Zeichnungen erläutert. Es zeigt:
- Fig. 1: eine erste schematische Querschnittdarstellung eines Generators,
- Fig. 2: eine zweite schematische Querschnittdarstellung des in Figur 1 dargestellten Generators,
- Fig. 3: eine schematische Darstellung eines ersten Betriebszustands des in den Figuren 1 und 2 dargestellten Generators,
- Fig. 4: eine schematische Darstellung eines zweiten Betriebszustands des in den Figuren 1 und 2 dargestellten Generators,
- Fig. 5: eine schematische Darstellung eines dritten Betriebszustands des in den Figuren 1 und 2 dargestellten Generators, und
- Fig. 6: eine schematische Darstellung eines vierten Betriebszustands des in den Figuren 1 und 2 dargestellten Generators.

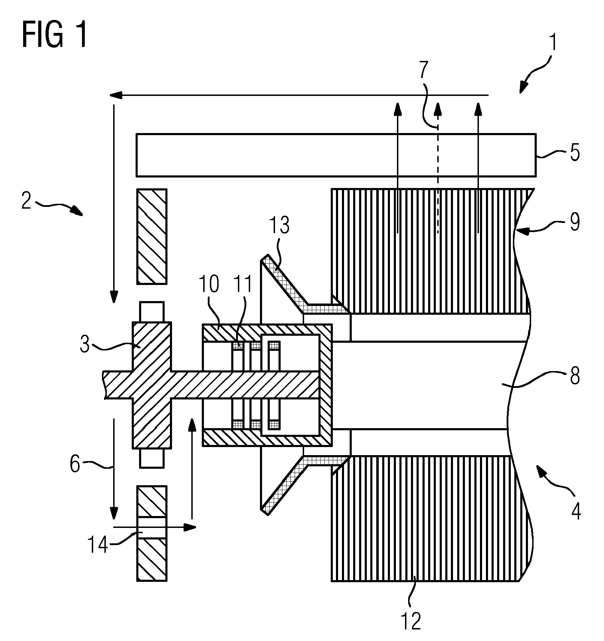

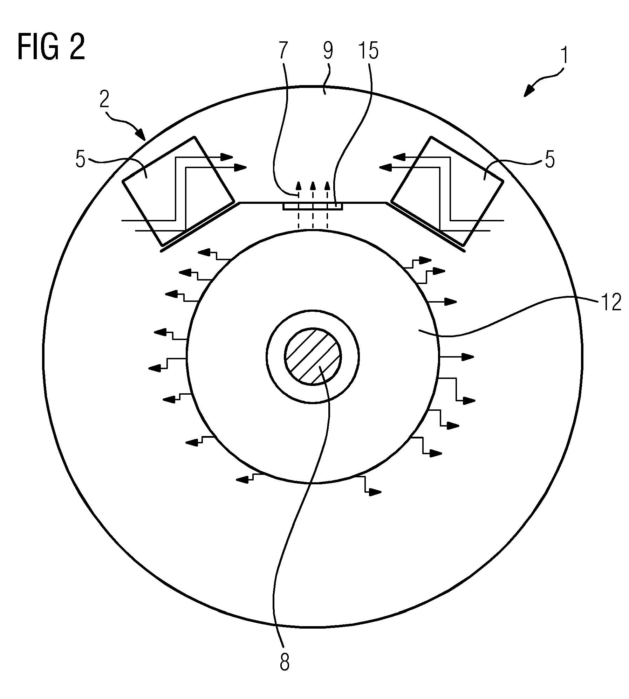

Es wird zunächst auf die Figuren 1 und 2 Bezug genommen.

Dargestellt ist ein Generator 1, der im vorliegenden Ausführungsbeispiel als Turbogenerator ausgebildet ist. Ein derartiger Generator 1 wird auch als Vollpolmaschine bezeichnet und ist eine Bauart eines Synchrongenerators, der z.B. von schnelllaufenden Gas- oder Dampfturbinen angetrieben wird und in Wärmekraftwerke mittlerer bis großer Größe zur Gewinnung von elektrischer Energie verwendet wird.

Der Generator 1 weist einen Rotor 8 und einen Ständer 9 auf. In den Figuren 1 und 2 ist eine zum Rotor 8 gehörende Läuferkappe 10 und ein Rotorwickelkopf 11 sowie ein zum Ständer 9 gehörendes Ständerblechpaket 12 und ein Ständerwickelkopf 13 dargestellt.
Ferner weist der Generator 1 im vorliegenden Ausführungsbeispiel eine Kühleinrichtung 2 auf. Die Kühleinrichtung 2 weist im vorliegenden Ausführungsbeispiel zumindest zwei Kühleinrichtungskomponenten 3, 5 auf. Eine erste der beiden Kühleinrichtungskomponenten 3, 5 ist im vorliegenden Ausführungsbeispiel als Kühlfördereinrichtung 3 ausgebildet, bei der es sich im vorliegenden Ausführungsbeispiel um einen Lüfter handelt, von dem Gebläseschaufeln 3a und die Gebläsenabe 3b schematisch dargestellt sind. Die zweite der beiden Kühleinrichtungskomponenten 3, 5 ist im vorliegenden Ausführungsbeispiel als Kühler 5 ausgebildet. Im Betrieb fördert die Kühlfördereinrichtung 3 ein Kühlmittel, im vorliegenden Ausführungsbeispiel Luft, zu einer zu kühlenden Generatorkomponente 4 des Generators 1, im vorliegenden Ausführungsbeispiel zu dem Rotor 8 und dem Ständerblechpaket sowie der Ständerwicklung 12. Das erwärmte Kühlmittel wird dann durch den Kühler 5 geleitet, in dem dem Kühlmittel Wärme entzogen wird. Anschließend wird das abgekühlte Kühlmittel wieder der Kühlfördereinrichtung 3 zugeführt.

Des Weiteren weist die Kühleinrichtung 2 zumindest einen ersten Bypass 6 und eine zweiten Bypass 7 auf. Im vorliegenden Ausführungsbeispiel ist der erste Bypass 6 als Kühlmittelfördereinrichtung-Bypass 6 und der zweite Bypass 7 als Kühler-Bypass 7 ausgebildet.

Der Lüfter-Bypass 6 verbindet im vorliegenden Ausführungsbeispiel einen Einlass der Kühlfördereinrichtung 3 mit einem Auslass der Kühlfördereinrichtung 3 kühlmittelführend und erlaubt so ein Kurzschließen der Kühlfördereinrichtung 2, wie dies später noch detailliert beschrieben wird. Der Lüfter-Bypass 6 ist im vorliegenden Ausführungsbeispiel an einer Lüfterwand (Blower Wall) angeordnet, sodass eine strömungstechnische Verbindung zwischen einer Gebläseansaugkammer und einem Wickelraumkopf besteht. Der Kühler-Bypass 7 verbindet im vorliegenden Ausführungsbeispiel einen Einlass des Kühlers 5 mit einem Auslass des Kühlers 5 kühlmittelführend und erlaubt so ein Überbrücken des Kühlers 5, wie dies ebenfalls später noch detailliert beschrieben wird.

Der Kühlmittelfördereinrichtung-Bypass 6 kann mittels eines ersten Ventils 14 und der Kühler-Bypass 7 kann mittels eines zweiten Ventils 15 jeweils geöffnet und geschlossen werden.

Das erste Ventil 14 und/oder zweite Ventil 15 können jeweils pneumatisch, hydraulisch, elektrisch oder mechanisch ansteuerbar sein. Das Verschlussteil jeweils des ersten Ventils 14 und/oder zweiten Ventils 15 kann eine Klappe oder eine Irisblende sein, oder das erste Ventil 14 und/oder zweite Ventil 15 sind jeweils als pneumatische Quetschventile ausgebildet. Pneumatische Quetschventile weisen ein z.B. rund oder elliptisch geformten Gehäuse und ein Elastomerballon auf, das mittig in dem Gehäuse zentriert ist. Durch Zuführung von Gas in das Gehäuse verformt sich der Elastomerballon und sperrt somit den Ventildurchgang ab.

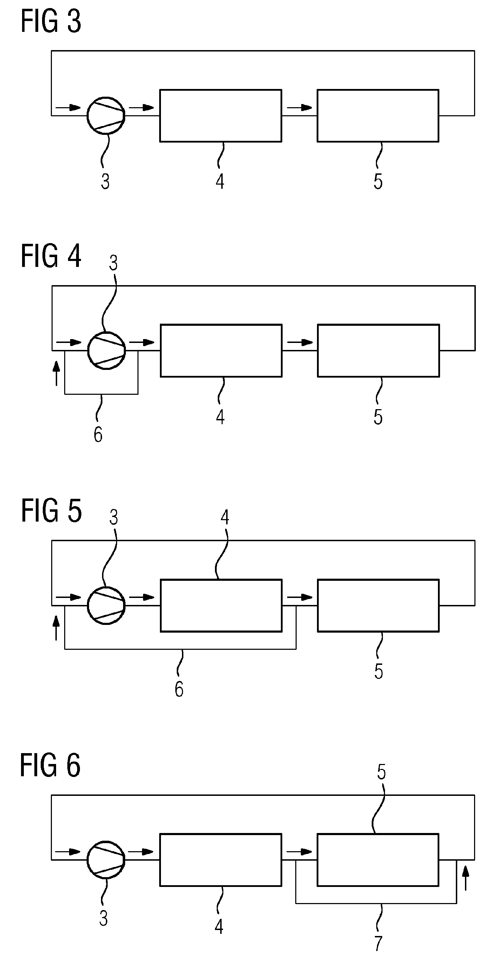

Es wird unter zusätzliche Bezugnahme auf die Figuren 3 bis 6 der Einsatz des Generators 1 als Phasenschieber und verschiedene Betriebsmodi der Kühleinrichtung 2 erläutert.

In Figur 3 ist ein Normalbetriebsmodus dargestellt, in dem der Generator 1 generatorisch betrieben wird. Sowohl der Kühlmittelfördereinrichtung-Bypass 6 als auch der Kühler-Bypass 7 sind geschlossen (und daher in Figur 3 nicht dargestellt). Die Kühleinrichtung 2 stellt eine vorbestimmte Kühlleistung bereit, wobei die Kühlfördereinrichtung 3 Kühlmittel sowohl durch die zu kühlende Generatorkomponente 4 als auch den Kühler 5 fördern muss, d.h. es muss deren jeweiliger Strömungswiderstand überwunden werden. Die aufgenommene Lüfterleistung ist proportional zu dem Produkt aus Volumenstrom und Differenzdruck.

In Figur 4 ist hingegen ein erster Betriebspunkt mit niedrigem Kühlbedarf dargestellt. Der Kühlmittelfördereinrichtung-Bypass 6 ist durch Öffnen des ersten Ventils 14 geöffnet, so dass Kühlmittel von dem Auslass der Kühlmittelfördereinrichtung 3 zurück zu deren Einlass strömen kann und nicht mehr durch die zu kühlende Generatorkomponente 4 und den Kühler 5 strömt. Somit konsumiert die Kühlfördereinrichtung 3 weniger Energie wegen eines reduzierten Differenzdrucks.

In Figur 5 ist ein zweiter Betriebspunkt mit niedrigem Kühlbedarf dargestellt, bei dem der Kühlmittelfördereinrichtung-Bypass 6 einen Auslass der zu kühlenden Generatorkomponente 4 mit dem Einlass der Kühlfördereinrichtung 3 kühlmittelführend verbindet. Somit strömt Kühlmittel von dem Auslass der zu kühlende Generatorkomponente 4 zurück zu dem Einlass der Kühlmittelfördereinrichtung 3. Daher strömt Kühlmittel nicht mehr oder weniger durch den Kühler 5. Somit konsumiert die Kühlfördereinrichtung 3 weniger Energie.

In Figur 6 ist ein weiterer Betriebspunkt mit niedrigem Kühlbedarf dargestellt, bei dem der Kühler-Bypass 7 durch Öffnen oder teilweises Öffnen des Ventils 15 geöffnet ist und so den Kühler 5 überbrückt. Somit verbindet der Kühler-Bypass 7 einen Einlass des Kühlers 5 mit einem Auslass des Kühlers 5 kühlmittelführend und erlaubt so, den Kühler 5 zu überbrücken. So kann Kühlmittel vom Einlass des Kühlers 5 durch den Kühler-Bypass 7 direkt zum Auslass der Kühlers 5 strömen und so der Strömungswiderstand reduziert werden.

Z.B. kann eine Steuereinrichtung (nicht dargestellt) vorgesehen sein, die einen Kühlbedarf des Generators 1 erfasst und einem erfassten Kühlbedarf entsprechendes Ansteuersignal erzeugt, dass das zweite Ventil 15 oder 14 und damit den Kühler-Bypass 7 bzw. den Lüfter-Bypass 6 entsprechend öffnet oder schließt.

Der anhand der Figur 6 beschriebene Betriebsmodus kann auch mit einem der anhand der Figuren 4 und 5 beschriebenen Betriebsmodi kombiniert werden, um den Betrieb des Generators 1 als Phasenschieber noch energieeffizienter zu gestalten.

So kann durch die oben beschrieben Betriebsmodi der Betrieb von einem Generator 1 als Phasenschieber energieeffizienter gestalten werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betrieb eines Generators (1) mit einer Kühleinrichtung (2) zum Kühlen einer Generatorkomponente (4) des Generators (1),
mit den Schritten:
Erfassen eines Betriebspunktes des Generators (1) und, Zuschalten eines Bypasses (6, 7) parallel zu einer Kühleinrichtungskomponente (3, 5) der Kühleinrichtung (2) auf das Erfassen eines Betriebspunktes mit geringem Kühlbedarf im Phasenschieberbetrieb hin.

2. Verfahren gemäß Anspruch 1,
wobei der Bypass (6, 7) ein Kühlmittelfördereinrichtung-Bypass (6) ist, der zumindest parallel zu einer als Kühlmittelfördereinrichtung (3) ausgebildeten Kühleinrichtungskomponente (3, 5) geschaltet wird.

3. Verfahren gemäß Anspruch 2,
wobei der Kühlmittelfördereinrichtung-Bypass (6) parallel zu der Generatorkomponente (4) geschaltet wird.

4. Verfahren gemäß Anspruch 2 oder 3,
wobei dem erfassten Kühlbedarf entsprechend der Kühlmittelfördereinrichtung-Bypass (6) geöffnet oder geschlossen wird.

5. Verfahren gemäß einem der Ansprüche 1 bis 4,
wobei der Bypass (6, 7) ein Kühler-Bypass (7) ist, der zumindest parallel zu einer als Kühler (5) ausgebildeten Kühleinrichtungskomponente (3, 5) geschaltet wird.

6. Verfahren gemäß Anspruch 5,
wobei dem erfassten Kühlbedarf entsprechend der Kühler-Bypass (7) geöffnet oder geschlossen wird.

7. Generator (1) mit einer Kühleinrichtung (2) zum Kühlen einer Generatorkomponente (4) des Generators (1), mit einer Kühlmittelfördereinrichtung (3), und mit einem Bypass (6, 7), der parallel zu einer Kühleinrichtungskomponente (3, 5) der Kühleinrichtung (2) auf das Erfassen eines Betriebspunktes mit geringem Kühlbedarf im Phasenschieberbetrieb hin zuschaltbar ist.

8. Generator (1) gemäß Anspruch 7,
wobei der Bypass (6, 7) ein Kühlmittelfördereinrichtung-Bypass (6) ist, der zumindest parallel zu einer als Kühlmittelfördereinrichtung (3) ausgebildeten Kühleinrichtungskomponente (3, 5) schaltbar ist.

9. Generator (1) gemäß Anspruch 8,
wobei der Kühlmittelfördereinrichtung-Bypass (6) parallel zur Generatorkomponente (4) schaltbar ist.

10. Generator (1) gemäß Anspruch 8 oder 9,
wobei dem erfassten Kühlbedarf entsprechend der Kühlmittelfördereinrichtung-Bypass (6) geöffnet oder geschlossen werden kann.

11. Generator (1) gemäß einem der Ansprüche 7 bis 10,
wobei der Bypass (6, 7) ein Kühler-Bypass (7) ist, der zumindest parallel zu einer als Kühler (5) ausgebildeten Kühleinrichtungskomponente (3, 5) schaltbar ist.

12. Generator (1) gemäß Anspruch 11,
wobei dem erfassten Kühlbedarf entsprechend der Kühler-Bypass (7) geöffnet oder geschlossen werden kann.

13. Kühleinrichtung (2) für einen Generator (1) nach einem der Ansprüche 7 bis 12.
